# EUROPEAN PATENT SPECIFICATION

(11) **EP 1 173 344 B1**
(45) Date of publication and mention of the grant of the patent: **25.05.2005**
(21) Application number: 00921253.1
(22) Date of filing: 24.03.2000
(51) Int. Cl.: B60N 2/28

(54) **METHOD AND DEVICE FOR A CHILD'S CAR SAFETY-SEAT**
VERFAHREN UND VORRICHTUNG FÜR EINEN KINDERFAHRZEUGSICHERHEITSSITZ
PROCEDE ET DISPOSITIF RELATIFS A UN SIEGE DE SECURITE POUR BEBE POUR VOITURE

(30) Priority: 26.03.1999 SE 9901142
(43) Date of publication of application: 23.01.2002
(73) Proprietor: HTS Hans Torgersen & Sonn AS, 3535 Kroderen (NO)
(72) Inventor: SKÖLD, Björn-Ake, S-603 65 Norrköping (SE)
(74) Representative: Minderop, Ralph H., Dr. rer. nat.
(86) International application number: PCT/SE2000/000582
(87) International publication number: WO 2000/058124

(56) References cited:
- EP-A2- 0 822 115
- WO-A1-98/25788
- US-A- 4 480 870

## Description

The present invention relates to a device for a child's car safety seat which is fastenable facing backwards on a car seat, comprising a frame intended to carry an upholstered seat shell and when fitted on the seat of the car seat to support itself by a pair of feet at the front edge of the seat and to rest with a projecting arm against the back rest of the seat, according to the preamble of claim 1 (see, for example, EP-A-0 822 115).

The invention also relates to a method of fastening a child's car safety seat, according to the preamble of claim 4.

In known car safety seats of the type named above, special straps are used for fastening the car safety seat and in combination with these or alone the seat belt belonging to the car seat. A common feature of these known car safety seats is that the straps or seat belt can be arranged incorrectly due to error or carelessness so that the fastening no longer meets the requirements set by the competent authority, and in an accident does not offer a child sitting in the car safety seat the intended protection.

The object of the present invention is to achieve improved fastening of a rear-facing car safety seat. This is achieved in that the car safety seat has the features indicated in the characterizing part of claim 1, and in that a method according to claim 4 is used.

Further features of the device are disclosed in the dependent product claims 2 and 3.

The invention is to be explained in greater detail below with reference to the enclosed drawing, in which Fig. 1 shows in diagrammatic form a car safety seat according to the invention mounted on the front passenger seat of a car. Fig. 2 shows clearly how the car safety seat is fastened by means only of the ordinary seat belt of the passenger seat. Figures 3a - 3d show different stages in the final fastening of the car safety seat to the car seat by tightening of the car seat belt.

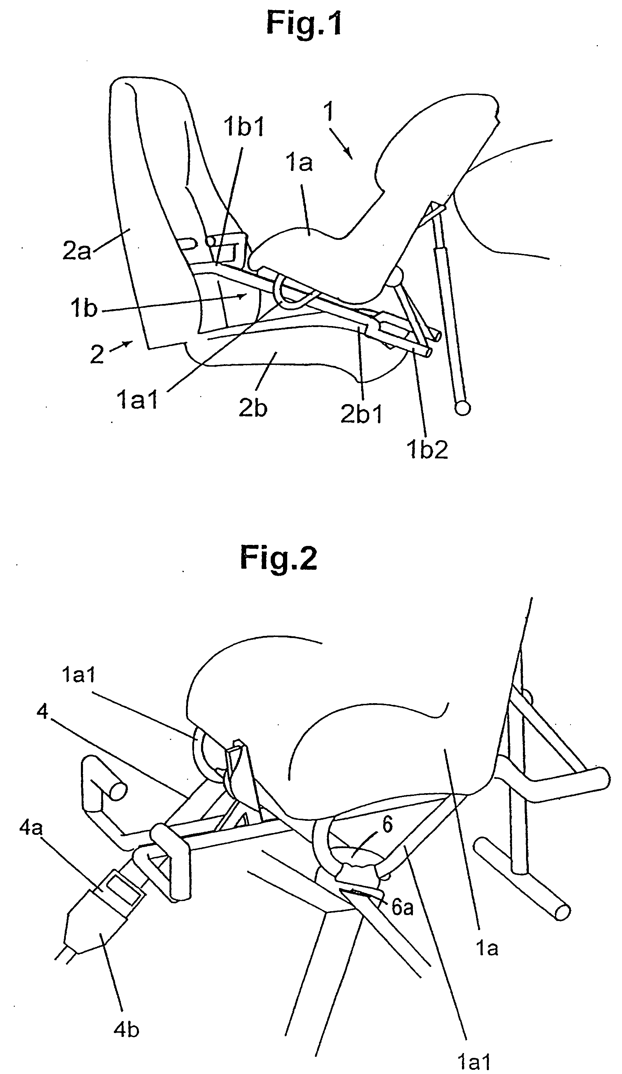

In Fig. 1, 1 generally describes a child's car safety seat which is fastenable facing backwards on a car seat 2. The car safety seat comprises an upholstered seat shell 1a which rests on a frame 1b, which has a projecting arm 1b1, intended to rest against the back rest 2a of the car seat when the car safety seat 1 is fitted on the car seat 2, and a pair of feet 1b2 with the purpose of supporting themselves against the seat 2b of the car seat 2, preferably at its front edge 2b1.

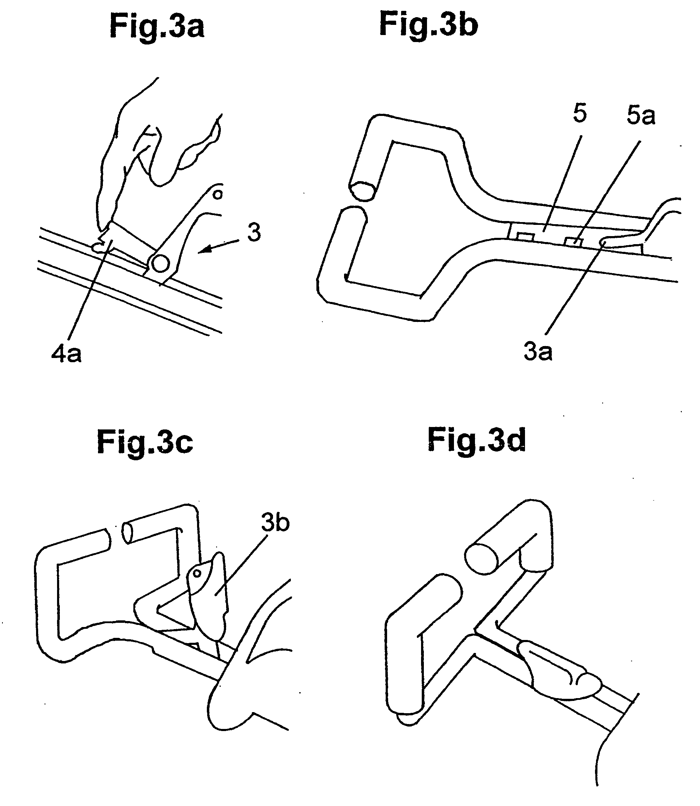

According to the invention, the seat shell 1a is disposed displaceably on the arm 1b1 and is fixable by means of a locking mechanism 3 in one of several optional positions. In relation to Figures 3a - 3d it will be explained later how this locking mechanism 3 can be executed and can function.

To fasten the car safety seat 1 on the car seat 2, the seat belt 4 belonging to the car seat and comprising a male connecting part 4a and a female connecting part 4b fixed to the car chassis is used on the one hand; and on the other hand two closed loops 1a1 fixedly attached to the seat shell 1a. In this connection, the seat belt 4 with the male connecting part 4a is threaded through the loops 1a1, following which the male connecting part is fastened in the female connecting part 4b.

The locking mechanism 3 is disposed according to the invention on fixing in a chosen position to move the seat shell 1a along the arm I b in a direction which means that the seat belt 4 is tightened.

Figures 3a - 3d illustrate how such fixing / tightening can be achieved. Extending along at least a part of the arm 1b1 is a rail 5 fixed on the arm, which rail has preferably equispaced and rectangular openings 5a. The locking mechanism 3 is a so-called eccentric lock manoeuvrable by a handle 3b, with a catch 3a which is insertable into a selected opening 5a. On movement of the handle 3b towards the fixing position of the eccentric lock, movement of the seat shell 1a in the direction tightening the seat belt 4 is achieved due to the engagement of the catch 3a in the opening 5a. On modem seat belts of the three-point type, there is a locking device in the belt mechanism which is intended to be used when fastening a child's car safety seat. The purpose of this locking device is to remove the flexibility which means that it is normally possible to move somewhat in the car seat without the seat belt being tightened. If a locking device of this kind is absent, this function must be replaced by the locking element 6 which according to the invention, is affixed to the parts of the seat belt 4. In Fig. 2, this locking element consists of a locking clip which is generally S-shaped. In this connection, the parts of the belt are inserted into slots 6a open in two opposite directions, preferably so that the slots 6a then lie on both sides of the loop 1a1.

It is evident that the invention can be modified within its as defined in the appended claims. This applies especially to the design of the locking mechanism 3 and the locking element 6. It is also understood that the child's car safety seat according to the invention can be used together with a seat belt of the two-point type which is now less common.

## Claims

1. Device for a child's car safety seat (1) fastenable facing backwards on a car seat (2), comprising a frame (1b) intended to carry an upholstered seat shell (1) and when mounted on the seat (2b) of the car seat (2) to support itself by a pair of feet (1b2) at the front edge (2b1) of the seat (2b) and to rest with a projecting arm (1b1) against the back rest (2a) of the seat (2), **characterized in that** the seat shell (1a) is arranged displaceably on the arm (1b1) and is fixable by means of a locking mechanism (3) in one of several optional positions along the arm (1b1), **in that** to fasten the car safety seat (1) to the car seat (2) there are two closed loops (1a1) connected to the seat shell (1a) for threading the seat belt belonging to the car seat (2) through, which belt, following threading, is disposed to be fastened in a conventional way, **in that** the locking mechanism (3) is disposed on fixing in a chosen position to move the seat shell (1a) along the essentially straight arm (1b1) in a direction tightening the seat belt (4) and **in that** the device comprises a locking element (6) attachable to the parts of the seat belt and disposed to prevent movement of the seat belt(4).

2. Device according to claim 1 or 2, **characterized in that** extending along at least a part of the arm (1b1) is a rail (5) fixed on the arm, which rail has preferably rectangular openings (5a), **in that** the locking mechanism has a catch (3a) insertable into the openings (5a) for engagement with the rail (5), which catch is operatively connected to an eccentric lock manoeuvrable by means of a handle (3b), which eccentric lock is disposed on movement of the handle (3b) towards the fixing position to achieve movement of the seat shell (1a) in the direction tightening the seat belt (4).

3. Device according to claim 1 or 2, **characterized in that** the locking element (6) comprises a generally S-shaped locking clip with two slots (6a) open in opposite directions, into which the belt parts (4) are insertable.

4. Method of fastening a child's car safety seat (1) to a car seat, a first frame part (1b1) of the car safety seat being an arm carried by the seat (2b) of the car seat (2) and a second frame part (1b1) being caused to rest against the back rest (2a) of the car seat (2), **characterized in that** for fastening the seat belt (4) belonging to the car seat (2) is led through at least one closed loop (1a1) operatively connected to the seat shell (1a) of the car safety seat (1), following which the seat belt (4) is locked in a conventional manner, and **in that** to post-tension the seat belt (4) holding the car safety seat (1) fast, the seat shell (1a), which is displaceable along the first frame part (1b1), is moved a way along the essentially straight first frame part (1b1) in a direction tightening the seat belt (4) to be fixed thereafter on said first frame part (1b1) and **in that** further movement of the belt is prevented by attaching a locking element (6) to the parts of the seat belt.

## Patentansprüche

1. Vorrichtung für einen Kraftfahrzeug-Kindersicherheitssitz (1), der nach hinten weisend auf einem Kraftfahrzeugsitz (2) befestigbar ist, enthaltend einen Rahmen (1b), der zum Tragen einer gepolsterten Sitzschale (1) vorgesehen ist und sich dann, wenn er auf dem Sitz (2b) des Kraftfahrzeugsitzes (2) montiert ist, selbst durch ein Paar Füße (1b2) an dem vorderen Rand (2b1) des Sitzes (2b) abstützt und mit einem vorragenden Arm (1b1) an der Rückenlehne (2a) des Sitzes (2) anliegt, **dadurch gekennzeichnet, dass** die Sitzschale (1a) verschiebbar auf dem Arm (1b1) angeordnet ist und mittels eines Verriegelungsmechanismus (3) in einer von mehreren wählbaren Positionen entlang dem Arm (1b1) fixierbar ist, dass zum Befestigen des Kraftfahrzeug-Kindersicherheitssitzes (1) an dem Kraftfahrzeugsitz (2) zwei geschlossene Schleifen (1a1) mit der Sitzschale (1a) verbunden sind, um den zum Kraftfahrzeugsitz (2) gehörenden Sicherheitsgurt durchzuführen, welcher Gurt nach dem Durchführen so angeordnet ist, dass er in herkömmlicher Weise befestigt wird, dass der Verriegelungsmechanismus (3) beim Fixieren in einer gewählten Position angeordnet ist, um die Sitzschale (1a) entlang dem im wesentlichen geraden Arm (1b1) in einer den Sicherheitsgurt (4) straffenden Richtung zu bewegen, und dass die Vorrichtung ein Blockierelement (6) enthält, das derart an den Teilen des Sicherheitsgurtes anbringbar und angeordnet ist, dass es eine Bewegung des Sicherheitsgurtes (4) verhindert.

2. Vorrichtung nach Anspruch 1, **dadurch gekennzeichnet, dass** entlang mindestens einem Teil des Armes (1b1) verlaufend eine Schiene (5) an dem Arm befestigt ist, welche Schiene vorzugsweise rechteckige Öffnungen (5a) hat, dass der Verriegelungsmechanismus eine in die Öffnungen (5a) zum Eingriff mit der Schiene (5) einführbare Sperrklaue (3a) hat, welche Sperrklaue in Wirkverbindung mit einer exzentrischen Verriegelung steht, die mittels eines Handgriffs (3b) bedienbar ist, welche exzentrische Verriegelung bei Bewegung des Handgriffs (3b) zu der Fixierposition hin angeordnet wird, um eine Bewegung der Sitzschale (1a) in der den Sicherheitsgurt (4) straffenden Richtung zu erzielen.

3. Vorrichtung nach Anspruch 1 oder 2, **dadurch gekennzeichnet, dass** das Blockierelement (6) eine allgemein S-förmige Blockierklammer mit zwei Schlitzen (6a) enthält, die in entgegengesetzten Richtungen offen sind und in die die Gurtteile (4) eingeführt werden können.

4. Verfahren zum Befestigen eines Kraftfahrzeug-Kindersicherheitssitzes (1) an einem Kraftfahrzeugsitz, wobei ein erster Rahmenteil (1b1) des Kindersicherheitssitzes ein von dem Sitz (2b) des Kraftfahrzeugsitzes (2) getragener Arm ist und ein zweiter Rahmenteil (1b1) veranlasst wird, an der Rückenlehne (2a) des Kraftfahrzeugsitzes (2) anzuliegen, **dadurch gekennzeichnet, dass** zum Befestigen der zu dem Kraftfahrzeugsitz (2) gehörende Sicherheitsgurt (4) durch mindestens eine geschlossene Schleife (1a1) geführt wird, die mit der Sitzschale (1a) des Kindersicherheitssitzes (1) wirkverbunden ist, woraufhin der Sicherheitsgurt (4) in herkömmlicher Weise eingeklinkt wird, und dass zum Nachspannen des den Kindersicherheitssitz (1) fest haltenden Sicherheitsgurtes (4) die Sitzschale (1a), die entlang dem ersten Rahmenteil (1b1) verschiebbar ist, über eine Distanz entlang dem im wesentlichen geraden ersten Rahmenteil (1b1) in einer den Sicherheitsgurt (4) straffenden Richtung bewegt wird, um anschließend an dem ersten Rahmenteil (1b1) fixiert zu werden, und dass eine weitere Bewegung des Gurtes durch Anbringen eines Blockierelements (6) an den Teilen des Sicherheitsgurtes verhindert wird.

## Revendications

1. Dispositif concernant un siège de sécurité pour bébé (1) à bord d'une voiture, pouvant être fixé, en regardant vers l'arrière, sur un siège (2) de la voiture, comprenant un cadre (1b) conçu pour supporter une coque (1a) d'un siège rembourré et, une fois monté sur l'assise (2b) du siège (2) de la voiture, conçu pour être supporté lui-même par une paire de pieds (1b2) au niveau du bord avant (2b1) de l'assise (2b) et pour s'appuyer, par un bras saillant (1b1), contre le dossier (2a) du siège (2),
**caractérisé**
- **en ce que** la coque (1a) du siège est disposée en étant mobile sur le bras (1b1) et peut être fixée au moyen d'un mécanisme de verrouillage (3) dans l'une des différentes positions possibles le long du bras (1b1),
- **en ce que**, pour fixer le siège de sécurité (1) de la voiture sur le siège (2) de la voiture, il est prévu deux boucles fermées (1a1) reliées à la coque (1a) du siège, pour faire passer la ceinture du siège faisant partie du siège (2) de la voiture, laquelle ceinture, une fois passée, est disposée pour être fixée de manière classique,
- **en ce que** le mécanisme de verrouillage (3) est disposé, sur la fixation, dans une position choisie pour déplacer la coque (1a) du siège le long du bras (1b1), pratiquement droit, dans une direction serrant la ceinture (4) du siège, et
- **en ce que** le dispositif comprend un élément de verrouillage (6) pouvant être fixé sur les parties de la ceinture du siège et disposé pour empêcher le mouvement de la ceinture (4) du siège.

2. Dispositif selon la revendication 1, **caractérisé en ce qu'**un rail (5), fixé sur le bras, s'étend le long au moins d'une partie du bras (1b1), lequel rail comprend des ouvertures de préférence rectangulaires (5a), **en ce que** le mécanisme de verrouillage comprend un ergot (3a) pouvant être introduit dans les ouvertures (5a), pour s'enclencher avec le rail (5), lequel ergot est fonctionnellement relié à un blocage excentrique pouvant être manoeuvré au moyen d'une poignée (3b), lequel blocage excentrique est disposé, lors du mouvement de la poignée (3b), vers la position de fixation, pour terminer le mouvement de la coque (1a) du siège, dans la direction serrant la ceinture (4) du siège.

3. Dispositif selon la revendication 1 ou 2, **caractérisé en ce que** l'élément de verrouillage (6) comprend un collier de verrouillage généralement en forme de S, comportant deux fentes (6a) ouvertes dans des directions opposées, fentes dans lesquelles peuvent être introduites les parties (4) de la ceinture.

4. Procédé de fixation d'un siège de sécurité pour bébé (1) à bord d'une voiture, sur un siège de la voiture, une première partie (1b1) du cadre du siège de sécurité de la voiture étant un bras supporté par l'assise (2b) du siège (2) de la voiture, une seconde partie (1b1) du cadre venant en appui contre le dossier (2a) du siège (2) de la voiture,
**caractérisé**
- **en ce que**, pour la fixation, la ceinture (4) du siège, faisant partie du siège (2) de la voiture, est guidée à travers au moins une boucle fermée (1a1) fonctionnellement reliée à la coque (1a) du siège de sécurité (1) de la voiture, après quoi la ceinture (4) du siège est verrouillée de manière classique,
- **en ce que**, pour tendre ensuite la ceinture (4) du siège maintenant solidement le siège de sécurité (1) de la voiture, la coque (1a) du siège, qui peut être déplacée le long de la première partie (1b1) du cadre, est déplacée le long de la première partie (1b1) du cadre, pratiquement droite, dans une direction serrant la ceinture (4) du siège, pour être fixée ensuite sur ladite première partie (1b1) du cadre, et
- **en ce qu'**un mouvement ultérieur de la ceinture est empêché, en fixant un élément de verrouillage (6) sur les parties de la ceinture du siège.
